# EUROPÄISCHE PATENTSCHRIFT

(11) **EP 0 614 028 B1**
(45) Veröffentlichungstag und Bekanntmachung des Hinweises auf die Patenterteilung: **11.09.1996**
(21) Anmeldenummer: 94810138.1
(22) Anmeldetag: 04.03.1994
(51) Int. Cl.: F16H 21/46, B63H 1/30, C05F 17/02, E21B 11/00, B01F 11/00

(54) **Vorrichtung zur Erzeugung einer inversionskinematischen Bewegung**
Device for generating an inverted kinematic movement
Dispositif de génération d'un mouvement cinématique inverse

(30) Priorität: 05.03.1993 CH 651/93; 08.09.1993 US 117960
(43) Veröffentlichungstag der Anmeldung: 07.09.1994
(73) Patentinhaber: Dettwiler, Hermann, CH-4417 Ziefen (CH)
(72) Erfinder: Dettwiler, Hermann, CH-4417 Ziefen (CH)
(74) Vertreter: Eschmann, Heinz

(56) Entgegenhaltungen:
- EP-A- 0 283 439
- DE-A- 1 936 595
- DE-B- 1 207 750

## Beschreibung

Die vorliegende Erfindung betrifft eine Vorrichtung gemäss dem Oberbegriff des unabhängigen Patentanspruchs 1.

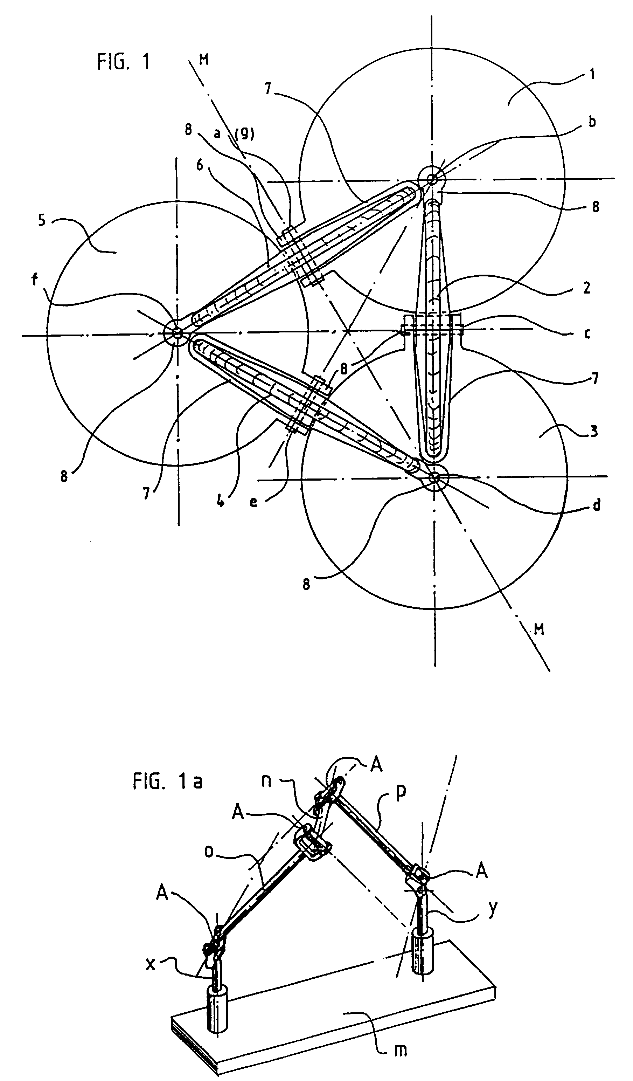

Dieser Erfindung liegt die inversionskinematische Bewegungscharakteristik zugrunde, wie sie eingehend in der DE-PS 589 452 von Paul Schatz beschrieben ist. Das dort beschriebene räumliche Bewegungssystem zeichnet sich dadurch aus, dass es aus einzelnen, in sich starren Gliedern besteht, die miteinander durch Gelenke zu einem beweglichen, ringförmigen Verband vereinigt sind, welcher zwangsläufig umstülpbar ist. Ein solches Bewegungssystem beruht bekanntlich auf der praktischen Anwendung des in zwei Hälften zerlegbaren Würfelgürtels. Jede dieser Würfelgürtelhälften besteht, wie Fig. 1a zeigt, aus einem Gestellglied m und drei schwenkbar miteinander verbundenen Gliedern des Würfelgürtels, das heisst einem Mittelglied n und zwei Grenzgliedern o und p. Die einzelnen Glieder o, n und p sind durch Schwenkachsen A miteinander verbunden, deren je zwei einander benachbarte im rechten Winkel zueinander stehen. Im Gestell m sind zwei Antriebswellen x und y drehbar gelagert.

Anwendungen dieses Prinzips zeigen beispielsweise die W0-A 86/04648 und EP-A 283 439, aus der die im Oberbegriff von Anspruch 1 aufgeführten Merkmale bekannt sind. Ein am mittleren Glied der halben Würfelgürtelkette befestigtes oloidartiges Gebilde (vgl. CH-PS 500 000) weist zwei um 90° gegeneinander verdrehte Paddel auf. Die beiden seitlichen Glieder der halben Würfelgürtelkette haben hier nur eine Haltefunktion, d.h. sie können nicht als Mitnehmerelemente für das strömungsfähige Medium verwendet werden und wirken je nach Einsatzgebiet störend.
Dazu müssen die Tragarme ausladend und damit entsprechend massiv dimensioniert werden, um einerseits das Gestänge verdrehsicher zu halten und andererseits den voluminösen Ausrenkungen des Mittelteils Platz zu gewähren. Auch ist die Herstellung der dort gezeigten, in sich verdrehten Körperformen sehr aufwendig und eine präzise Verarbeitung äusserst schwierig und damit entsprechend teuer. Je nach Einsatzgebiet könnten sich auch leicht Gegenstände im Gestänge verfangen und sogar den Lauf hemmen oder die Vorrichtung beschädigen.

Es ist die Aufgabe der vorliegenden Erfindung, eine auf dem Prinzip der von Paul Schatz entwickelten umstülpbaren Würfelkette beruhende Vorrichtung vorzuschlagen, welche eine relativ unkomplizierte und somit kostengünstige Herstellung gestattet und sich ferner durch eine vielseitige Anwendung auszeichnet, wobei unter anderem ein gegenüber vergleichbaren, bekannten Anlagen verbesserter Wirkungsgrad beim Schiffsantrieb, der Wassersanierung, beim Materialbau im lockeren Erdreich sowie der Materialumsetzung (Schnee, Kompost) und nicht zuletzt im Einsatz bei der Substanzmischung erzielt wird, wo die bekannten Rotationsmischer bisher bekanntlich das gefürchtete Haften einer Mischungskomponente am Rührer oder an der Gefässwand nicht verhindern konnten und die Anbringung effizienter Abstreifer nicht realisierbar war.

Diese Aufgabe wird gelöst durch die im kennzeichnenden Teil des unabhängigen Patentanspruchs definierte Erfindung.

Dank dem erfinderischen Konstruktionsprinzip sind die beiden Seitenglieder der halben Würfelgürtelkette nun nicht mehr blosse Tragarme, sondern sind in die Hauptfunktion der Vorrichtung mit einbezogen, da sie nun selbst in Form von Verdrängungs- und Säuberungselementen ausführbar sind.

Nachstehend werden Ausführungsbeispiele des Erfindungsgegenstandes nebst einer Variante unter Bezugnahme auf die beiliegende Zeichnung beschrieben.
Fig. 1a zeigt die bekannte, technisch anwendbare halbe Würfelgürtelkette nach Paul Schatz,
Fig. 1 ist eine Draufsicht auf eine mit sechs Mitnehmerelementen versehene Ausführungsform,
Fig. 2 zeigt eine einfache Variante mit nur zwei Mitnehmerelementen,
Fig. 3 veranschaulicht eine Extremstellung der sechsgliedrigen Rondellenkette,
Fig. 4 stellt ein Rührorgan mit Abstreifern dar,
Fig. 5 ist eine Darstellung eines Gerätes für die Bearbeitung von lockerem Erdreich etc. und die
Fig. 6, 7, 8, 9 und 9a zeigen weitere Ausführungsformen.

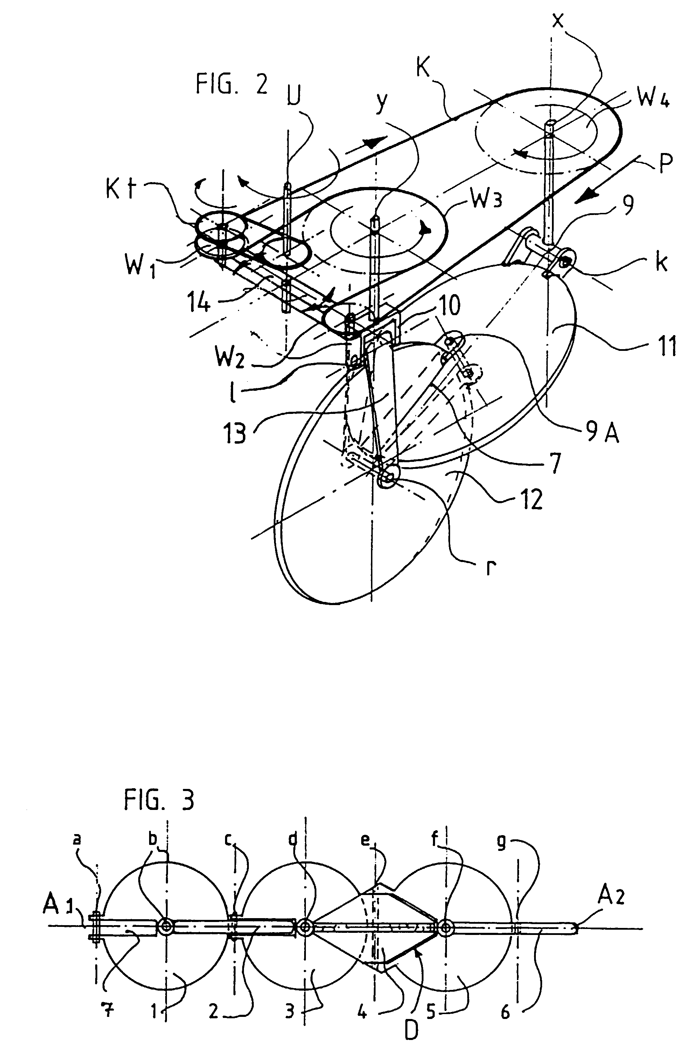

Die Figuren 1 und 3 zeigen sechs vorzugsweise kreisscheibenförmige Rondellen 1 - 6 mit jeweils einer Achse b, c, d, e, f, a und einer von der Peripherie in das Zentrum ragenden radialen Aussparung 7, in welche die Nachbarrondelle hineinragt, so dass jeweils eine Rondelle im Bereich der genannten Aussparung 7 um die Peripherie der Nachbarrondelle herumlaufen kann. Dieses in Figur 1 dargestellte Bewegungssystem entspricht somit dem in sich geschlossenen Würfelgürtel nach Paul Schatz, wobei die der Würfeldiagonale entsprechende Symmetrieachse mit M-M bezeichnet ist und die in Figur 1a mit o, n und p bezeichneten Gürtelglieder nun durch die Rondellen 1 bis 3 und 4 bis 6 ersetzt sind.

Jede der Rondellen 1 bis 6 weist eine angeformte Lagergabel 8 auf, die zur Aufnahme einer der genannten Achsen a bis f dient, an welchen die Rondellen 1 bis 6 drehbar gelagert sind. An der mit a(g) bezeichneten Achse kann ein rotierendes Antriebsorgan angekoppelt werden.

Die sechs Rondellen nach Figur 1 lassen sich so zusammenstellen, dass beispielsweise eine Rondelle 6 in die radiale Aussparung 7 der Nachbarrondelle 1 durch eine Drehung von 90° eingefahren wird, bis die Zentralbohrung von Rondelle 6 mit der Achse der Lagergabel 8 von Rondelle 1 deckungsgleich ist, so dass die Achse a gesteckt werden kann. Dieser Arbeitsvorgang wiederholt sich, bis sämtliche Rondellen 1 bis 6, wie in Figur 1 gezeigt, ineinander greifen. Das so entstandene Gebilde lässt sich gegen das Zentrum oder davon weg einrollen bzw. ausrollen, so dass die entstehende Bewegung exakt derer des umstülpbaren Würfelgürtels von Paul Schatz (DE-PS 589 452) entspricht.

Die Aussparungen 7 sind geringfügig breiter als die Dicke der in sie hineinragenden Nachbarrondelle. Beim Beispiel nach Fig. 1 erstrecken sich die Aussparungen 7, dem Durchmesser der Nachbarrondelle entsprechend, fast über den gesamten Rondellenradius bis in die Nähe der Rondellenachse. Bei kleinerem Rondellendurchmesser kann auch eine kürzere radiale Aussparung 7 gewählt werden, deren Achse aber stets radial gegen die Achse der Nachbarrondelle gerichtet ist bzw. rechtwinklig auf derselben steht (vgl. Fig. 1a).

Da somit jede Rondelle mit praktisch ihrer gesamten Oberfläche beidseitig in der Aussparung der Nachbarrondelle rotiert, wirkt jede Rondelle im Aussparungsbereich als Abstreifer bzw. Säuberungsorgan für die Nachbarrondelle, was für zahlreiche Anwendungen grosse Einsparungen an Zeitaufwand bringt.

Durch die Verwendung der beschriebenen Rondellen kann mit einem Minimum grossflächiger Elemente das grösstmögliche räumliche Gebilde inversionskinematisch bewegt werden. Die beschriebenen Rondellen können formmässig so verändert werden, bis sie sich gegenseitig berühren und somit die Drehung hemmen würden. Grundsätzlich sind alle denkbaren Formen möglich, welche im Bereich zwischen zwei benachbarten Achsen, zum Beispiel a und b in Figur 3, eine innerhalb eines Doppelkonus D verbleibende Breitenerstreckung aufweisen. Bei Ueberschreitung dieses geometrischen Grenzprofils wäre keine kontinuierliche Bewegung mit Rotationsantrieb, sondern nur noch eine hin- und hergehende, oszillierende Schwenkbewegung möglich.

Die in Figur 1 dargestellte sechsgliedrige Rondellenkette kann an einer beliebigen Achsverbindung (a, b, c, d, e, f) getrennt und an der Grenzstelle aufgehängt, bzw. angetrieben werden. An dem Gebilde nach Figur 3 liegt die Trennstelle beispielsweise bei der Achse a bzw. der zugehörigen Achsbohrung g der Rondelle 6. Dieses Gebilde kann vorzugsweise an beiden Enden (Antriebsstellen A₁, A₂) angetrieben werden. Ein einseitiger Antrieb (z.B. bei A₁) ist zwar grundsätzlich möglich, doch kann dieser eine koordinierte Ausrenkung der Gelenke nicht gewährleisten. Aus Figur 3 ist die Extremstellung ersichtlich. Es können auch weniger als sechs Rondellen eingesetzt werden, beziehungsweise können Rondellen durch andere Elemente, beispielsweise Gabeln, ersetzt werden, welche die Verbindung von Achse zu Achse übernehmen.

Die Reduzierung der Vorrichtung auf zwei Rondellen zeigt Figur 2. Zwei in definierter Stellung an einem nicht dargestellten Gestell drehbar montierte Achsen x und y sind einseitig mit Lagergabeln 9 und 10 für die Aufnahme von Achsbolzen k, l versehen. An der Lagergabel 9 hängt eine Rondelle 11, die in diesem Falle keine Aussparung aufzuweisen braucht. Die zweite Rondelle 12 ist mit ihrer radialen Aussparung 7 über die Rondelle 11 gesteckt und mittels der Achse 9A schwenkbar mit derselben verbunden. Die Rondelle 12 ist ihrerseits mittels einer Gabel 13, die im Zentrum der Rondelle 12 an einem Achsbolzen r angreift, an der Lagergabel 10 aufgehängt, das heisst mittels eines Achsbolzens 1 mit der Achse y schwenkbar und - wie alle anderen Verbindungen - drehmomentschlüssig gekoppelt.

Ueber eine Antriebswelle U, die mit einem nicht gezeigten Motor gekoppelt ist, wird ein geeignetes Antriebselement K, zum Beispiel eine endlose Rollenkette, über einen Kettentrieb Kt in eine Linearbewegung gebracht. Das Antriebselement K ist über vier Räder W1, W2, W3 und W4 geführt, wobei die beiden Räder W3 und W4 mit den Antriebswellen x und y drehstarr verbunden sind. Durch die Rollenkette K werden somit die Räder entsprechend den Pfeilrichtungen in Drehung versetzt. Die kardanischen Ausrenkungen der Elemente 11, 12 und 13, die den Gliedern o, n und p (Fig. 1a) der halben Würfelgürtelkette entsprechen, rufen bei den Antriebswellen x und y eine gegenläufige Drehung bei nicht konstanter Drehzahl bzw. Umfangsgeschwindigkeit hervor, was eigentlich elliptische Antriebsräder bedingen würde. Diese Forderung lässt sich jedoch umgehen, wenn die beiden eine Drehsinnumkehr bewirkenden Umlenkräder W1 und W2 auf einem Pendelarm 14 mit der Antriebs- und Pendelachse U montiert sind, wodurch die ungleichen Antriebsketten-Längen ausgependelt werden.

Die einzelnen Rondellen können im Gegensatz zu bisher im Rahmen des umstülpungskinematischen Systems verwendbaren Paddelkörpern auf einer konventionellen Rotations-Werkzeugmaschine wie Drehbank, Drückbank etc. ganz nach Bedarf in vielfältigen Formen bearbeitet werden. Dank ihrer unkomplizierten, im Prinzip zweidimensional verbleibenden, flächigen Form kann eine hohe Präzision auf kostengünstigem Wege eingehalten werden, was die Qualität wesentlich erhöht und den Preis in einem vernünftigen Rahmen hält.

Die Gabel 13 muss bei der Ausführung nach Figur 2 nur einmal gefertigt werden, weil sich die Rondelle 11 selbst an der Achse 9 trägt. Eventuelle Strömungsbeeinflussungen treten deshalb nur einseitig auf.

Wie Figur 1 zeigt, können weitere Rondellen oder aber auch andere Elemente mannigfaltigster Form an diesem System angehängt werden, was vielfältigste Anwendungsgebiete gestattet.

Die in Figur 2 dargestellte Vorrichtung lässt sich insbesondere als Schiffsantrieb einsetzen. Bei Drehung der Antriebswellen y und x durch einen nicht gezeigten Antrieb bewegen sich die Rondellen 11 und 12 inversionskinematisch abrollend, so dass quer zu den Antriebswellen x und y (Pfeil P) eine Vorschubbewegung erfolgt. Wenn sich die Antriebswellen x und y einmal drehen, wird je einmal die Frontseite und Rückseite der Rondellen 11 und 12 um 180° gedreht. Dies bewirkt starke Schubkräfte, die sich paddelartig von dem umgebenden Medium abstossen. Die bei Schiffsschrauben auftretenden grossen schraubenförmigen Wasserbewegungen, welche viel Kraft verschleissen, sind in dem beschriebenen Prinzip nicht vorhanden. Versuche zeigen deshalb erstaunlich wenig Energieaufwand bei grosser Leistung. Zweckmässige Ausformungen der Schaufeln 11 und 12 lassen die Leistungen erheblich optimieren. Versuche zeigen ferner die Möglichkeit, mit diesem Antrieb zum Zwecke der Wassersanierung zugleich auch Sauerstoff in das Wasser einzutragen.

Die beim Schiffsantrieb eingesetzten Wasserverdrängungsorgane (Rondellen) können dank ihrer unkomplizierten Form vorzugsweise als Hohlkörper, zum Beispiel in rostfreiem Stahlblech, erstellt aber auch nach Bedarf mit einem Medium, zum Beispiel Oel, gefüllt werden, so dass sie quasi schwerelos im Wasser schweben und deren Halterung nur relativ geringen Reaktionskräften unterworfen ist. Auch wird durch die inversionskinematische Bewegung, wie Versuche bestätigt haben, der bei den konventionellen Schiffsschrauben gefürchtete Kavitationseffekt vermieden.

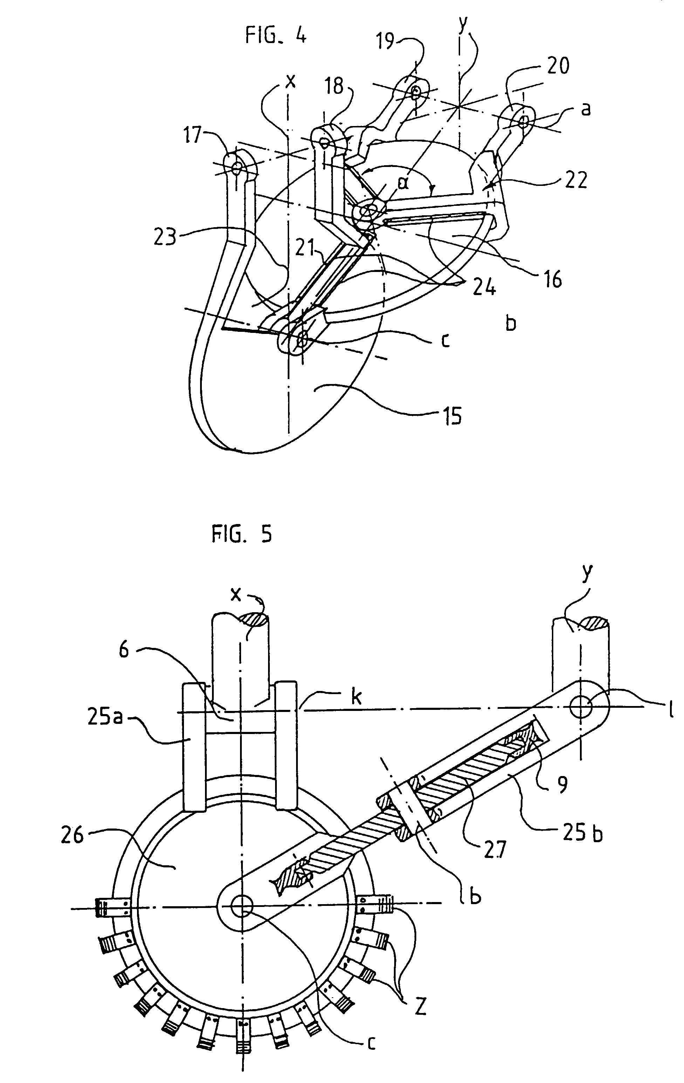

Die in Figur 4 dargestellte Konstruktion ist ein Misch- oder Rührorgan, welches ebenfalls die Eigenschaft aufweist, sich während des Laufes fortlaufend selbst zu reinigen. Zwei praktisch kreisförmige Scheiben 15 und 16 sind mit jeweils vier Aufhängebügeln 17, 18, 19 und 20 versehen, die zur Aufnahme zweier nicht dargestellter Schwenkachsen dienen. Dabei weist die Scheibe 16 wiederum eine radiale Ausparung 21 auf, in welche die Scheibe 15 hineinragt, so dass sich die beiden Scheiben inversionskinematisch bewegen können. Der Aufhängebügel 19 ist zusammen mit dem Bügel 20 zu einer Doppelgabel 22 geformt, deren beide Doppelschenkel auf den Oberflächen der Scheibe 16 praktisch aufliegen und somit als Abstreifer für das anhaftende Mischgut dienen. Die beiden Gabelteile der Doppelgabel 22 bilden einen Winkel α von maximal 120°, vorzugsweise 120°, womit gewährleistet ist, dass die Scheibe 16 auf ihrer gesamten Oberfläche durch Abstreifen ständig sauber gehalten wird.

Die Scheibe 15 hat unterhalb der Aufhängebügel 17 und 18 eine Aussparung 23, welche dem Schwenkradius entsprechen sollte und deren Bereich von der Scheibe 16 nicht bestrichen wird. Die Doppelgabel 22 ist dabei so ausgestaltet, dass bei der Schwenkbewegung des Systems alle Flächen der Scheibe 15 bestrichen werden. Die in Figur 4 mit 24 bezeichneten Abstreifkanten können in zweckmässigem Material und Ausführung vielfältig gestaltet werden, zum Beispiel als umlaufende Kunststofflippe bzw. endlose Gummirundschnur. Mit dieser Konstruktion lassen sich anspruchsvolle Mischungen und Rührvorgänge in pastösen oder klebrigen Medien erfolgreich durchführen. Dazu muss noch auf den hohen Mischeffekt durch die inversionskinematische Bewegung hingewiesen werden.

Ein weiteres Einsatzgebiet der Vorrichtung zur Erzeugung einer inversionskinematischen Bewegung stellt Figur 5 dar. Es handelt sich um ein Gerät zum Abbauen oder Umschichten von lockerem Erdreich, Schüttgut oder insbesondere Kompost. An zwei Antriebswellen x und y sind zwei Gabeln 25a und 25b aufgehängt, welche beide um je eine Achse k bzw. l pendelnd gelagert sind (vergleiche auch Figur 2). Die kinematische Anordnung entspricht im wesentlichen derjenigen von Figur 2. Die Randpartien der Rondellen 26 und 27 sind mit entsprechend geformten zahnförmigen Umsetzorganen Z belegt, welche dem Verschleiss genügend standhalten und auch die Angriffsfläche reduzieren, um Energie zu sparen. Je nachdem die Antriebswellen x und y oben, seitlich oder in einem geeigneten Winkel angeordnet sind, können verschiedene, der zu lösenden Aufgabe gemässe Bewegungscharakteristiken erreicht werden. Beim Einsatz als Schneefräse werden die Antriebsachsen vorzugsweise waagrecht angeordnet und die Rondellen 26, 27 können durch Schaufeln abgeflachter Form ersetzt werden, um die Strasse eben abfräsen zu können.

Um einen Komposthügel umzuschichten, sollte das Gerät senkrecht von oben angetrieben werden. Die Inversionsbewegung bewirkt eine perfekte und intensive Umschichtung, da das Kompostmaterial nicht nur wie bei den bekannten Rotationssystemen verlagert, sondern über Kreuz umgeschichtet wird. Dabei kann es von Vorteil sein, anstelle der scheibenförmigen Rondellen kugelförmige Hohlkörper zu verwenden, welche teilweise oder auf ihrer Gesamtoberfläche mit zahnförmigen Umsetzorganen Z bestückt sein können.

Unter den anhand der Zeichnung dargestellten und beschriebenen Ausführungsbeispielen zeigt Figur 1 ein totales, in sich geschlossenes inversionskinematisches System, das den gesamten Würfelgürtel bzw. zwei Würfelgürtelhälften aufweist, die längs der Symmetrieachse MM spiegelbildlich angeordnet sind. Die Systeme gemäss den Figuren 2, 4 und 5 zeigen dagegen jeweils die Anwendung eines halben Würfelgürtels, könnten aber in jedem Falle ohne weiteres spiegelbildlich durch die andere Würfelgürtelhälfte ergänzt werden.

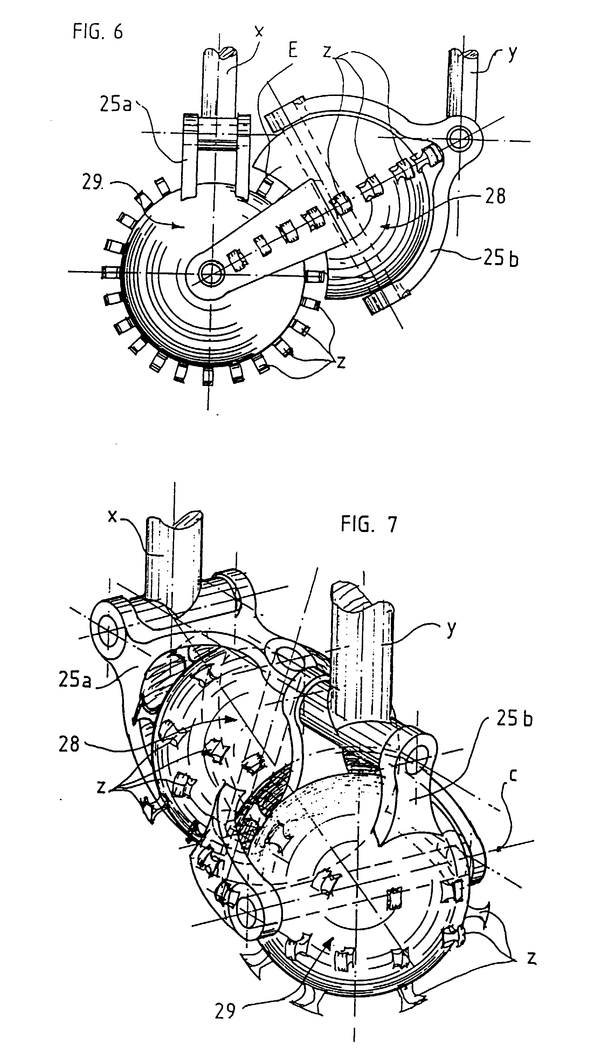

Die Figuren 6 und 7 zeigen jeweils eine Vorrichtung, die sich mit Vorteil zum Umsetzen von Kompost bewährt. Die Mitnehmerelemente 28, 29 sind hier kugelförmig ausgebildet, wobei die zahnförmigen Umsetzorgane Z entweder in Form eines Mittelstreifens (Fig. 6) angeordnet oder (Fig. 7) auf die praktisch gesamte Kugelfläche verteilt sein können. Wie Figur 6 zeigt, ist die eine Kugel 28 mit einer Einstülpung E versehen, um die inversionskinematische Bewegung nicht zu behindern.

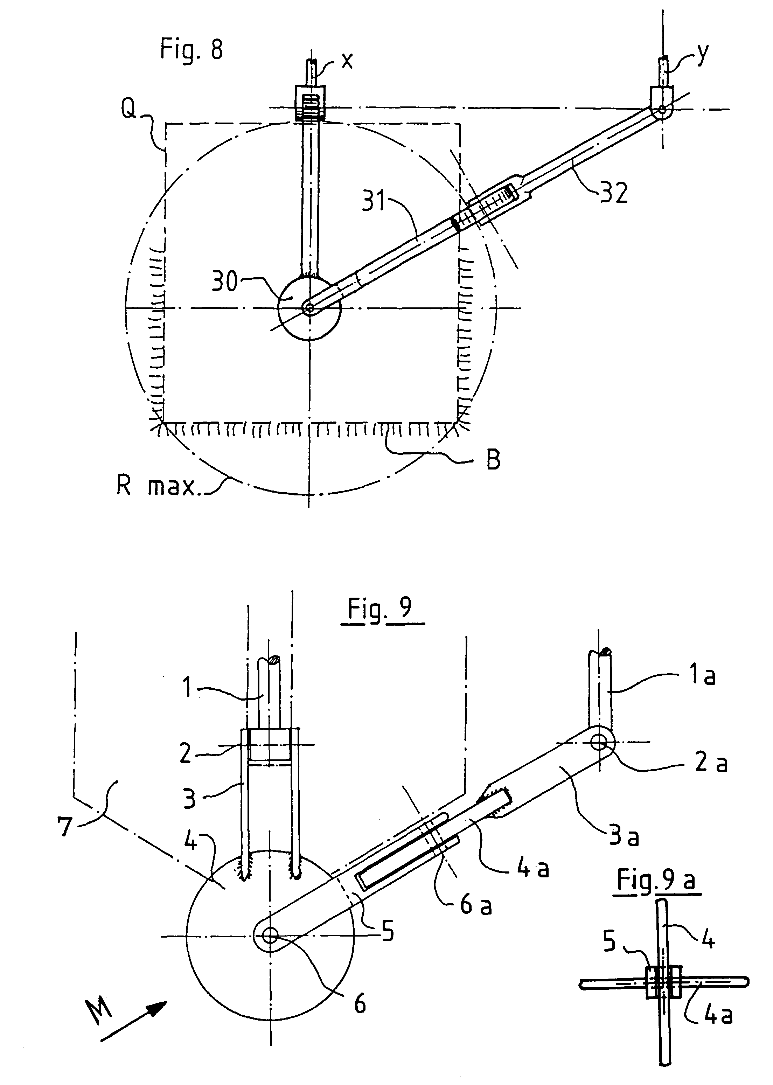

Wie bereits erwähnt wurde, können die Mitnehmerelemente, die zur Verdrängung des Mediums dienen, innerhalb der durch die Inversionsinematik vorgegebenen Grenzen mannigfaltig variiert werden. Bei dem in Figuren 4 bis 7 gezeigten Prinzip liesse sich beispielsweise auch, wie Figur 8 zeigt, eine Rondelle 30 geringen Durchmessers einsetzen und durch eine Rondelle 31 mit der Antriebsgabel 32 verbinden. Die maximal mögliche Grösse einer verwendbaren Rondelle 30 ist strichpunktiert gezeichnet und mit Rₘₐₓ bezeichnet. Die quadratische Umrissform Q, die mit Bürsten B versehen zur Reinigung von Spezialformen einsetzbar ist, lässt sich ebenfalls problemlos realisieren, wobei zum Verständnis der sich ergebenden Bewegung zu berücksichtigen ist, dass sich die Antriebs-Rotationsbewegung lediglich mit einer 240°-Drehung auf das Profil Q auswirkt.

Die Fig. 9 und 9a zeigen für das inversionskinematische System eine vereinfachte Ausführungsform, wobei Fig. 9a eine Ansicht in Richtung "M" der Fig. 9 darstellt. Da die rondellenartigen Widerstandselemente 4 und 4a im Durchmesser kleiner als die Strecke von Achse 6 zu 6a sind, kann ein kreuzweise geschlitztes Verbindungsstück 5 eingesetzt werden. Dadurch erhält man den Vorteil, dass an den Achsen 1 und la die gleichen Teile 3 und 4 bzw. 3a und 4a verwendet werden können. Vielschichtige Vereinfachungen, wie Herstellung, Ersatzteile und Verwendbarkeit gleicher Bauteile sind die Vorteile. Dazu können weitere Gestaltungen bis zur strichpunktierten Linie 7 als Verdrängungsorgane angebaut werden.

## Patentansprüche

1. Vorrichtung zur Umwandlung einer Rotationsbewegung zwecks gerichteter Verdrängung einer die Vorrichtung mindestens teilweise umgebenden strömungsfähigen oder fliess- bzw. schüttfähigen Substanz, wie beispielsweise gasförmige, flüssige, pastöse oder granulatförmige bzw. sonstige in lockerer Form vorliegende Substanzen, mit einem Gestell (m) und zwei in gegenseitigem Abstand an demselben angeordneten, drehbar gelagerten, ortsfesten Achsen (x, y), an welchen die beiden Endabschnitte einer zwei seitliche Glieder (o, p) und ein mittleres Glied (n) aufweisenden halben Würfelgürtelkette angelenkt sind, wobei die beiden seitlichen Glieder (o, p) mit den ortsfesten Achsen (x, y) und dem mittleren Glied (n) durch Schwenkachsen (a bis f) verbunden sind, welche aufeinander folgend um jeweils 90° gegeneinander versetzt sind, wobei den Gliedern (o, p, n) wenigstens zwei Mitnehmerelemente zugeordnet sind, dadurch gekennzeichnet, dass das mittlere Glied (n) und mindestens eines der beiden seitlichen Glieder (o, p) der halben Würfelkette als zur Verdrängung strömungsfähiger oder schüttbarer Substanzen geeignete, flächige Mitnehmerelemente ausgebildet sind, von zwei benachbarten Mitnehmerelementen (1 bis 6; 11, 12; 15, 16; 26, 27; 28, 29) mindestens eines im Hinblick auf die ungehinderte Bewegung des Nachbarelementes eine rechtwinklig gegen die Schwenkachse (a bis g) des Nachbarelementes gerichtete Freizone aufweist, in welche das Nachbarelement während des inversionskinematischen Bewegungsablaufs rotierend hineinragt, derart, dass unter Verwendung unkomplizierter Formen der Mitnehmerelemente grossflächige Substanzverlagerungen bei gegenseitiger Substanzabstreifung benachbarter Mitnehmerelemente ermöglicht ist.

2. Vorrichtung nach Anspruch 1, dadurch gekennzeichnet, dass von zwei einander benachbarten Mitnehmerelementen mindesteins eines eine radiale, von seiner Peripherie bis annähernd zu seiner zentralen Achse reichende Aussparung (7) als Freizone aufweist, deren Breite mindestens der Dicke des in die Aussparung hineinragenden Nachbarelementes entspricht.

3. Vorrichtung nach Anspruch 1, dadurch gekennzeichnet, dass dieselbe zwei halbe Würfelgürtelketten in spiegelbildlicher Anordnung aufweist.

4. Vorrichtung nach einem der Ansprüche 1 oder 2, dadurch gekennzeichnet, dass die Mitnehmerelemente (1 bis 6; 11, 12; 15, 16) mindestens annähernd kreisscheibenförmig sind.

5. Vorrichtung nach Anspruch 1 zur Anwendung in einem festen schüttfähigen Medium, vorzugsweise zum Materialabbau im lockeren Erdreich und zum Umsetzen von Kompost, dadurch gekennzeichnet, dass die Mitnehmerelemente (26, 27) an einem Teil ihres Umfanges eine Zahnung (Z) aufweisen.

6. Vorrichtung nach Anspruch 5, dadurch gekennzeichnet, dass die Mitnehmerelemente kugelförmig ausgebildet und an ihren Oberflächen mindestens teilweise mit zahnförmigen Umsetzorganen (Z) versehen sind.

7. Vorrichtung nach Anspruch 1 mit lediglich zwei Mitnehmerelementen (11, 12), deren eines (12) eine radiale Aussparung (7) als Freizone aufweist, in welche das andere (11) hineinragt, dadurch gekennzeichnet, dass mit einer Antriebsachse (U) ein endloses Uebertragungsorgan (K) verbunden ist, das über zwei mit den Antriebswellen (x, y) eines inversionskinematischen Gelenksystems (11, 12, 13) gekuppelte Räder (W3, W4) geführt ist, wobei ferner zwei eine Drehsinnänderung der genannten Räder (W3, W4) bewirkende Umlenkräder (W1, W2) auf einer Pendelachse (14) so gelagert sind, dass damit die durch die kardanische Ausrenkung des Gelenksystems bedingten Geschwindigkeitsabweichungen der beiden gegenläufigen Antriebswellen (x, y) des Gelenksystems ausgeglichen werden.

8. Vorrichtung nach Anspruch 7, dadurch gekennzeichnet, dass das mit der genannten Aussparung (21) versehene Mitnehmerelement (16) an einer Doppelgabel (22) aufgehängt ist, deren beide Doppelschenkel auf den Oberflächen des Mitnehmerelementes (16) praktisch aufliegen und somit als Abstreifer dienen, wobei die beiden Abschnitte der Doppelgabel (22) einen Winkel a von maximal 120° bilden.

9. Vorrichtung nach Anspruch 1 zum Einsatz als Schiffsantrieb, dadurch gekennzeichnet, dass die Mitnehmerelemente im Hinblich auf deren Gewichtsreduktion als Hohlkörper ausgebildet sind.

10. Vorrichtung nach Anspruch 1 zum Einsatz als Reinigungsgerät, dadurch gekennzeichnet, dass die Mitnehmerelemente mit peripherischen Bürsten versehen sind.

## Claims

1. A device for converting a rotational movement for the purpose of directed displacement of a fluid, flowable or pourable substance surrounding the device at least in part, such as for example gaseous, liquid, pasty or granulated substances or other substances present in a loose form, with a frame **(m)** and two rotatably mounted stationary shafts **(x, y)** which are arranged at a distance from each other on the said frame **(m)** and to which are articulated the two end portions of a half cube-belt linkage comprising two lateral links **(o, p)** and a central link **(n)**, wherein the two lateral links **(o, p)** are connected to the stationary shafts **(x, y)** and the central link **(n)** by pivot shafts **(a to f)** which are successively staggered by 90° from one another in each case, and wherein at least two entrainment elements are associated with the links **(o, p, n)**, **characterized in that** the central link **(n)** and at least one of the two lateral links **(o, p)** of the half cube linkage are constructed in the form of flat entrainment elements suitable for displacing flowable or pourable substances at least one of two adjacent entrainment elements (1 to 6; 11, 12; 15, 16; 26, 27; 28, 29) with respect to the unobstructed movement of the adjacent element has a free zone which is directed at right angles towards the pivot shaft **(a** to **g)** of the adjacent element and into which the adjacent element projects in a rotating manner during the inversion-kinematic course of movement, in such a way that, when uncomplicated shapes of the entrainment elements are used, displacement of the substance over large areas is made possible with the substance on adjacent entrainment elements being wiped off in a reciprocal manner.

2. A device according to Claim 1, **characterized in that** at least one of two mutually adjacent entrainment elements comprises a radial recess (7) as a free zone, which extends from the periphery of the said entrainment element to approximately its median axis and the width of which corresponds to at least the thickness of the adjacent element projecting into the recess.

3. A device according to Claim 1, **characterized in that** it comprises two half cube-belt linkages in a mirror-inverted arrangement.

4. A device according to one of Claims 1 or 2, **characterized in that** the entrainment elements (1 to 6; 11, 12 ; 15, 16) are at least approximately in the shape of circular discs.

5. A device according to Claim 1 for use in a solid pourable medium, preferably for the disintegration of material in loose ground and for turning over compost, **characterized in that** the entrainment elements (26, 27) have a serration **(Z)** over part of their periphery.

6. A device according to Claim 5, **characterized in that** the entrainment elements are made spherical and are provided at least in part with serrated turning-over members **(Z)** on their surface.

7. A device according to Claim 1 with only two entrainment elements (11, 12), of which one (12) has a radial recess (7) as a free zone into which the other (11) projects, **characterized in that** an endless transmission device **(K)**, which is guided over two wheels **(W3, W4)** coupled to the drive shafts **(x, y)** of an inversion-kinematic articulation system (11, 12) is connected to a drive shaft **(U)**, wherein two turning- over wheels **(W1, W2)** producing a change in the rotational direction of the said wheels **(W3, W4)** are additionally mounted on a jointed cross-shaft axle (14) in such a way as to compensate the fluctuations in velocity of the two contrarotating drive shafts **(x, y)** of the articulation system caused by the cardanic dislocation of the articulation system.

8. A device according to Claim 7, **characterized in that** the entrainment element (16) provided with the said recess (21) is suspended on a double fork (22), the two double arms of which practically rest against the surfaces of the entrainment element (16) and thus act as wipers, wherein the two portions of the double fork (22) form an angle α of at most 120°.

9. A device according to Claim 1 for use as a drive for a ship, **characterized in that** the entrainment elements are constructed as hollow members in order to reduce their weight.

10. A device according to Claim 1 for use as a cleaning appliance, **characterized in that** the entrainment elements are provided with brushes on their periphery.

## Revendications

1. Dispositif pour la transformation d'un mouvement de rotation en vue d'un refoulement dirigé d'une substance à même de s'écouler ou coulante ou versable entourant au moins partiellement le dispositif, comme par exemple des substances gazeuses, liquides, pâteuses ou granuleuses ou d'autres substances se présentant sous forme meuble, comportant un bâti (m) et deux axes fixes (x, y), montés à rotation, disposés à distance réciproque sur ce dernier, auxquels sont articulées les deux extrémités d'une demi-chaîne de ceinture cubique comportant deux membres latéraux (o, p) et un membre médian (n), de sorte que les deux membres latéraux (o, p) sont reliés aux axes fixes (x, y) et au membre médian (n) par des axes de pivotement (a à f), lesquels sont successivement décalés à chaque fois de 90° l'un par rapport à l'autre, au moins deux éléments d'entraînement étant associés aux membres (o, p, n), caractérisé en ce que le membre médian (n) et au moins un des deux membres latéraux (o, p) de la demi-chaîne de ceinture sont formés comme des éléments d'entraînement plans, appropriés pour le refoulement de substances à même de s'écouler ou versables, au moins un élément d'entraînement de deux éléments d'entraînement adjacents (1 à 6; 11, 12; 15, 16; 26, 27; 28, 29) comportant, afin de ne pas entraver le mouvement de l'élément adjacent, une zone libre dirigée à angle droit vers l'axe de pivotement (a à g) de l'élément adjacent, dans laquelle l'élément adjacent pénètre en rotation au cours du mouvement d'inversion cinématique, de telle sorte que l'utilisation d'éléments d'entraînement de formes non compliquées rende possible des déplacements de substance sur une grande surface et un raclage de substance réciproque d'éléments d'entraînement adjacents.

2. Dispositif suivant la revendication 1, caractérisé en ce qu'au moins un élément d'entraînement de deux éléments d'entraînement adjacents comporte, en tant que zone libre, un évidement (7) radial, s'étendant depuis sa périphérie jusqu'à proximité de son axe médian, évidement dont la largeur correspond au moins à l'épaisseur de l'élément adjacent y pénétrant.

3. Dispositif suivant la revendication 1, caractérisé en ce qu'il comporte deux demi-chaînes de ceinture cubique en disposition énantiomorphe.

4. Dispositif suivant la revendication 1 ou 2, caractérisé en ce que les éléments d'entraînement (1 à 6; 11, 12; 15, 16) ont au moins approximativement la forme de disques circulaires.

5. Dispositif suivant la revendication 1 pour l'utilisation dans un milieu versable solide, de préférence pour la désagrégation de matière dans une terre meuble et pour le retournement de compost, caractérisé en ce que les éléments d'entraînement (26, 27) comportent sur une partie de leur périphérie une denture (Z).

6. Dispositif suivant la revendication 5, caractérisé en ce que les éléments d'entraînement sont sphériques et sont pourvus sur leurs surfaces au moins partiellement d'organes de retournement en forme de dents (Z).

7. Dispositif suivant la revendication 1 comportant uniquement deux éléments d'entraînement (11, 12), dont l'un (12) comporte, en tant que zone libre, un évidement radial (7), dans lequel pénètre l'autre élément d'entraînement (11), caractérisé en ce qu'est relié à un axe moteur (U) un organe de transmission sans fin (K), qui est entraîné par l'intermédiaire de deux roues (W3, W4) couplées aux arbres moteurs (x, y) d'un système articulé à inversion cinématique (11, 12, 13), deux roues de renvoi (W1, W2), qui effectuent une modification du sens de rotation des roues mentionnées (W3, W4), étant en outre montées sur un axe oscillant (14), de telle sorte que les variations de vitesse des deux arbres moteurs contrarotatifs (x, y) du système articulé provoquées par la torsion "à la cardan" du système articulé soient ainsi compensées.

8. Dispositif suivant la revendication 7, caractérisé en ce que l'élément d'entraînement (16) pourvu de l'évidement mentionné (21) est suspendu à une fourche double (22), dont les deux branches doubles s'étendent pratiquement sur les surfaces de l'élément d'entraînement (16) et servent ainsi de racleurs, les deux segments de la fourche double (22) formant un angle α de 120° maximum.

9. Dispositif suivant la revendication 1 pour l'utilisation en tant que propulsion de navire, caractérisé en ce que les éléments d'entraînement sont conçus comme des corps creux afin de réduire leurs poids.

10. Dispositif suivant la revendication 1 pour l'utilisation en tant qu'appareil de nettoyage, caractérisé en ce que les éléments d'entraînement sont pourvus de brosses périphériques.
